(19) **Europäisches Patentamt**

**European Patent Office**

**Office européen des brevets**

(11) **EP 1 225 772 A2**

(12) **EUROPÄISCHE PATENTANMELDUNG**

(43) Veröffentlichungstag:
   **24.07.2002 Patentblatt 2002/30**

(51) Int Cl.⁷: **H04Q 7/22**

(21) Anmeldenummer: **02100011.2**

(22) Anmeldetag: **14.01.2002**

(84) Benannte Vertragsstaaten:
   **AT BE CH CY DE DK ES FI FR GB GR IE IT LI LU MC NL PT SE TR**
   Benannte Erstreckungsstaaten:
   **AL LT LV MK RO SI**

(30) Priorität: **15.01.2001 DE 10101703**

(71) Anmelder:
   • **Philips Corporate Intellectual Property GmbH**
     **52066 Aachen (DE)**
     Benannte Vertragsstaaten:
     **DE**
   • **Koninklijke Philips Electronics N.V.**
     **5621 BA Eindhoven (NL)**
     Benannte Vertragsstaaten:
     **DE FR GB IT**

(72) Erfinder: **Herrmann, Christoph, Dr.**
   **52066, Aachen (DE)**

(74) Vertreter: **Volmer, Georg, Dipl.-Ing. et al**
   **Philips Corporate**
   **Intellectual Property GmbH**
   **Weisshausstr. 2**
   **52066 Aachen (DE)**

(54) **Drahtloses Netzwerk mit einer Auswahl von Transport-Format-Kombinationen**

(57)    Die Erfindung bezieht sich auf ein drahtloses Netzwerk mit einer Funknetzwerk-Steuerung und mehreren zugeordneten Terminals, die jeweils zur Übertragung von aus Paketeinheiten eines logischen Kanals gebildeten Transportblöcken auf einem Transportkanal vorgesehen sind, dem ein Übertragungszeitintervall aus wenigstens einem Funkrahmen zugeordnet ist und der aktiv ist, wenn der Beginn seines Übertragungszeitintervalls und eines Funkrahmens übereinstimmen. Die Funknetzwerk-Steuerung oder ein Terminal sind zur Bildung wenigstens einer Transport-Format-Kombination, welche die zur Übertragung vorgesehenen Transportblöcke auf jedem Transportkanal angeben, so vorgesehen, dass eine erforderliche Transport-Format-Kombination zu bestimmen ist, die als Transport-Format jeweils die für eine Übertragung im zugeordneten Transportkanal wartenden Paketeinheiten enthält und dass aus einer Menge von vorgegebenen Transport-Format-Kombinationen diejenige Transport-Format-Kombination auszuwählen ist, welche der erforderlichen Transport-Format-Kombination entspricht oder am nächsten kommt.

FIG. 1

**Beschreibung**

Die Erfindung bezieht sich auf ein drahtloses Netzwerk mit einer Funknetzwerk-Steuerung und mehreren zugeordneten Terminals, die jeweils zur Übertragung von Nutzdaten auf, eine unterschiedliche Priorität aufweisenden logischen Kanälen vorgesehen sind, die auf wenigstens einen Transportkanal abgebildet sind

Aus 3rd Generation Partnership Project (3GPP); Technical Specification Group (TSG) RAN; Working Group 2 (WG2); Radio Interface Protocol Architecture; TS 25.302 V3.6.0) ist ein drahtloses Netzwerk bekannt, welches die Funktion der MAC-Schicht (MAC = Medium Access Control) beschreibt. Die in der RLC-Schicht (RLC = Radio Link Control) gebildeten Paketeinheiten werden der MAC-Schicht in Transportblöcke verpackt, die von der physikalischen Schicht über physikalische Kanäle von der Funknetzwerk-Steuerung zu einem Terminal oder umgekehrt übertragen werden. Außer einer solchen Multiplex- bzw. Demultiplex-Funktion hat die MAC-Schicht die Funktion, geeignete Transport-Format-Kombinationen (Transport Format Combination = TFC) auszuwählen. Eine Transport-Format-Kombination stellt eine Kombination von Transport-Formaten für jeden Transportkanal dar. Die Transport-Format-Kombination beschreibt u.a. wie die Transportkanäle in der physikalischen Schicht in einen physikalischen Kanal gemultiplext werden.

Der Erfindung liegt die Aufgabe zugrunde, ein drahtloses Netzwerk zu schaffen, welches eine Selektionsprozess für die Findung geeigneter Transport-Format-Kombinationen angibt.

Die Aufgabe wird erfindungsgemäß durch ein drahtloses Netzwerk mit einer Funknetzwerk-Steuerung und mehreren zugeordneten Terminals gelöst, die jeweils zur Übertragung von aus Paketeinheiten eines logischen Kanals gebildeten Transportblöcken auf einem Transportkanal vorgesehen sind, dem ein Übertragungszeitintervall aus wenigstens einem Funkrahmen zugeordnet ist und der aktiv ist, wenn der Beginn seines Übertragungszeitintervalls und eines Funkrahmens übereinstimmen, und die zur Bildung wenigstens einer Transport-Format-Kombination, welche die zur Übertragung vorgesehenen Transportblöcke auf jedem Transportkanal angeben, so vorgesehen sind,

- dass eine erforderliche Transport-Format-Kombination zu bestimmen ist, die als Transport-Format jeweils die für eine Übertragung im zugeordneten Transportkanal wartenden Paketeinheiten enthält, und
- dass aus einer Menge von vorgegebenen Transport-Format-Kombinationen diejenige Transport-Format-Kombination auszuwählen ist, welche der erforderlichen Transport-Format-Kombination entspricht oder am nächsten kommt.

Das erfindungsgemäße drahtlose Netzwerk schlägt einen zweistufigen Prozess zur Findung einer geeigneten Transport-Format-Kombination vor. Zuerst wird eine erforderliche Transport-Format-Kombination ermittelt, welche genau die Transport-Formate enthält bzw. Transportblöcke angibt, die zur Übertragung in den den logischen Kanälen zugeordneten Warteschlangen warten. Ist eine Transport-Format-Kombination vorhanden, welche der erforderlichen Transport-Format-Kombination entspricht, ist ein Tramsport-Format-Kombination gefunden. Im anderen Fall muss eine solche Transport-Format-Kombination gefunden werden, welche der erforderlichen Transport-Format-Kombination am nächsten kommt.

In den Unteransprüchen sind verschiedene Möglichkeiten zur Findung einer Transport-Format-Kombination aufgeführt, die der erforderlichen Transport-Format-Kombination am nächsten kommt.

Ausführungpbeispiele der Erfindung werden nachstehend anhand der Fig. näher erläutert. Es zeigen:

Fig. 1 ein drahtloses Netzwerk mit einer Funknetzwerk-Steuerung und mehreren Terminals,

Fig 2 ein Schichtenmodell zur Erläuterung verschiedener Funktionen eines Terminals oder einer Funknetzwerk-Steuerung und

Fig 3 bis 5 verschiedene Listen zur Erläuterung des erfindungsgemäßen Sortierschemas.

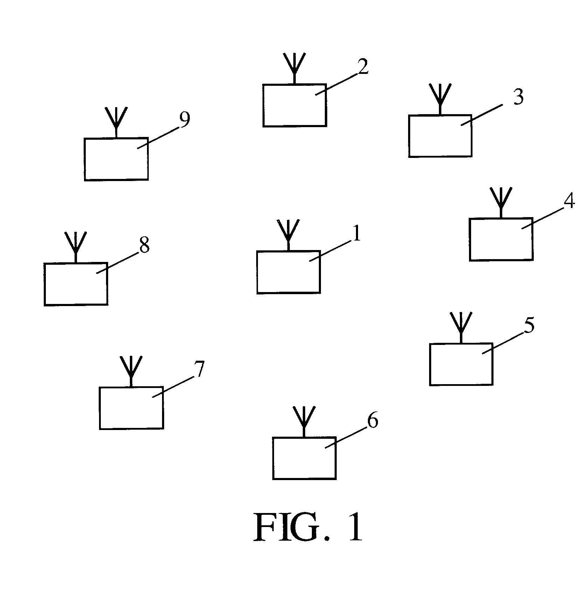

In Fig. 1 ist ein drahtloses Netzwerk, z.B. Funknetzwerk, mit einer Funknetzwerk-Steuerung (Radio Network Controller = RNC) 1 und mehreren Terminals 2 bis 9 dargestellt. Die Funknetzwerk-Steuerung 1 ist für Steuerung aller am Funkverkehr beteiligten Komponenten verantwortlich, wie z.B. der Terminals 2 bis 9. Ein Steuer- und Nutzdatenaustausch findet zumindest zwischen der Funknetzwerk-Steuerung 1 und den Terminals 2 bis 9 statt. Die Funknetzwerk-Steuerung 1 baut jeweils eine Verbindung zur Übertragung von Nutzdaten auf.

In der Regel sind die Terminals 2 bis 9 Mobilstationen und die Funknetzwerk-Steuerung 1 ist fest installiert. Eine Funknetzwerk-Steuerung 1 kann gegebenenfalls aber auch beweglich bzw. mobil sein.

In dem drahtlosen Netzwerk werden beispielsweise Funksignale nach dem FDMA-, TDMA- oder CDMA-Verfahren (FDMA= frequency division multiplex access, TDMA= time division multiplex access, CDMA= code division multiplex access) oder nach einer Kombination der Verfahren übertragen.

Beim CDMA-Verfahren, das ein spezielles Code-Spreiz-Verfahren (code spreading) ist, wird eine von einem Anwender stammende Binärinformation (Datensignal) mit jeweils einer unterschiedlichen Codesequenz moduliert. Eine solche Codesequenz besteht aus einem pseudo-zufälligen Rechtecksignal (pseudo noise code), dessen Rate, auch Chiprate genannt, in der Regel wesentlich höher als die der Binärinformation ist. Die Dauer eines Rechteckimpulses des pseudo-zufälligen Rechtecksignals wird als Chipintervall $T_c$ bezeichnet. $1/T_c$ ist die Chiprate. Die Multiplikation bzw. Modulation des Datensignals mit dem pseudo-zufälligen Rechtecksignal hat eine Spreizung des Spektrums um den Spreizungsfaktor $N_c = T/T_c$ zur Folge, wobei T die Dauer eines Rechteckimpulses des Datensignals ist.

Nutzdaten und Steuerdaten zwischen wenigstens einem Terminal (2 bis 9) und der Funknetzwerk-Steuerung 1 werden über von der Funknetzwerk-Steuerung 1 vorgegebene Kanäle übertragen. Ein Kanal ist durch einen Frequenzbereich, einen Zeitbereich und z.B. beim CDMA-Verfahren durch einen Spreizungscode bestimmt. Die Funkverbindung von der Funknetzwerk-Steuerung 1 zu den Terminals 2 bis 9 wird als Downlink und von den Terminals zur Basisstation als Uplink bezeichnet. Somit werden über Downlink-Kanäle Daten von der Basisstation zu den Terminals und über Uplink-Kanäle Daten von Terminals zur Basisstation gesendet.

Beispielsweise kann ein Downlink-Steuerkanal vorgssehen sein, der benutzt wird, um von der Funknetzwerk-Steuerung 1 Steuerdaten vor einem Verbindungsaufbau an alle Terminals 2 bis 9 zu verteilen. Ein solcher Kanal wird als Downlink-Verteil-Steuerkanal (broadcast control channel) bezeichnet. Zur Übertragung von Steuerdaten vor einem Verbindungsaufbau von einem Terminal 2 bis 9 zur Funknetzwerk-Steuerung 1 kann beispielsweise ein von der Funknetzwerk-Steuerung 1 zugewiesener Uplink-Steuerkanal verwendet werden, auf den aber auch andere Terminals 2 bis 9 zugreifen können. Ein Uplink-Kanal, der von mehreren oder allen Terminals 2 bis 9 benutzt werden kann, wird als gemeinsamer Uplink-Kanal (common uplink channel) bezeichnet. Nach einem Verbindungsaufbau zB. zwischen einem Terminal 2 bis 9 und der Funknetzwerk-Steuerung 1 werden Nutzdaten über einen Downlink- und ein Uplink-Nutzkanal übertragen. Kanäle, die nur zwischen einem Sender und einem Empfänger aufgebaut werden, werden als dedizierte Kanäle bezeichnet. In der Regel ist ein Nutzkanal ein dedizierter Kanal, der von einem dedizierten Steuerkanal zur Übertragung von verbindungsspezifischen Steuerdaten begleitet werden kann.

Damit Nutzdaten zwischen der Funknetzwerk-Steuerung 1 und einem Terminal ausgetauscht werden können, ist es erforderlich, dass ein Terminal 2 bis 9 mit der Funknetzwerk-Steuerung 1 synchronisiert wird. Beispielsweise ist aus dem GSM-System (GSM = Global System for Mobile communication) bekannt, in welchem eine Kombination aus FDMA- und T DMA-Verfahren benutzt wird, dass nach der Bestimmung eines geeigneten Frequenzbereichs anhand vorgegebener Parameter die zeitliche Position eines Rahmens bestimmt wird (Rahmensynchronisation), mit dessen Hilfe die zeitliche Abfolge zur Übertragung von Daten erfolgt. Ein solcher Rahmen ist immer für die Datensynchronisation von Terminals und Basisstation bei TDMA-, FDMA- und CDMA-Verfahren notwendig. Ein solcher Rahmen kann verschiedene Unter- oder Subrahmen enthalten oder mit mehreren anderen aufeinanderfolgenden Rahmen einen Superrahmen bilden.

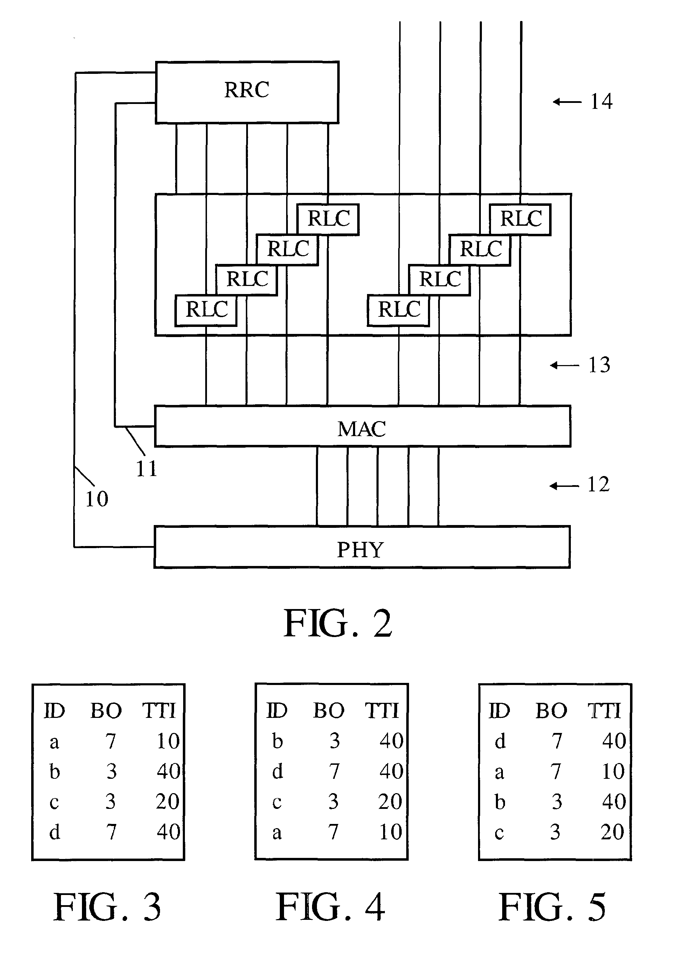

Der Steuer- und Nutzdatenaustausch über die Funkschnittstelle zwischen der Funknetzwerk-Steuerung 1 und den Terminals 2 bis 9 kann mit dem in Fig. 2 dargestellten, beispielhaften Schichtenmodell oder Protokollarchitektur (vgl. z.B. 3rd Generation Partnership Project (3GPP); Technical Spedfication Group (TSG) RAN; Working Group 2 (WG2); Radio Interface Protocol Architecture; TS 25.301 V3.6.0) erläutert werden. Das Schichtenmodell besteht aus drei Protokollschichten: der physikalischen Schicht PHY, der Datenverbindungsschicht mit den Unterschichten MAC und RLC (in Fig. 2 sind mehrere Ausprägungen der Unterschicht RLC dargestellt) und der Schicht RRC. Die Unterschicht MAC ist für die Medienzugriffssteuerung (Medium Access Control), die Unterschicht RLC für die Funkverbindungssteuerung (Radio Link Control) und die Schicht RRC für die Funkverwaltungssteuerung (Radio Resource Control) zuständig. Die Schicht RRC ist für die Signalisierung zwischen den Terminals 2 bis 9 und der Funknetzwerk-Steuerung 1 verantwortlich. Die Unterschicht RLC dient zur Steuerung einer Funkverbindung zwischen einem Terminal 2 bis 9 und der Funknetzwerk-Steuerung 1. Die Schicht RRC steuert die Schichten MAC und PHY über Steuerungsverbindungen 10 und 11. Hiermit kann die Schicht RRC die Konfiguration der Schichten MAC und PHY steuern. Die physikalische Schicht PHY bietet der MAC-Schicht Transportkanäle bzw. Transportverbindungen 12 an. Die MAC-Schicht stellt der RLC-Schicht logische Kanäle bzw. logische Verbindungen 13 zur Verfügung. Die RLC-Schicht ist über Zugangspunkte 14 von Applikationen erreichbar.

In der RLC-Schicht werden Paketeinheiten gebildet und in der MAC-Schicht in Transportblöcke verpackt, die von der physikalischen Schicht über physikalische Kanäle von der Funknetzwerk-Steuerung zu einem Terminal oder umgekehrt übertragen werden. Außer einer solchen Multiplex- bzw. Demultiplex-Funktion hat die MAC-Schicht die Funktion, geeignete Transport-Format-Kombinationen (Transport Format Combination = TFC) auszuwählen. Eine Transport-Format-Kombination stellt eine Kombination von Transport-Formaten für jeden Transportkanal dar. Die Transport-Format-Kombination beschreibt u.a. wie die Transportkanäle in der physikalischen Schicht in einen physikalischen Kanal gemultiplext (Zeitmultiplex) werden.

Jedes Transport-Format weist einen dynamischen und einem semi-statischen Teil auf. Der dynamische Teil beschreibt eine Transportblockmenge (Transport Block Set = TBS), die während eines Übertragungszeitintervalls (Transmission Time Interval = TTI) in einem Transportkanal übertragen wird, und der semi-statische Teil beinhaltet beispielsweise Informationen über die Art der fehlerkorrigierenden Codierung. Der semi-statische Teil ändert sich nur durch eine Rekonfigurierung des physikalischen Kanals Eine Transportblockmenge ist als eine Menge von Transportblöcken definiert, welche zwischen der physikalischen Schicht und der MAC-Schicht ausgetauscht werden. Die Größe eines Transportblocks ist durch die Anzahl von Bits einer Paketeinheit der RLC-Schicht und der Anzahl von Bits von hinzugefügten Steuerinformationen (Header) der MAC-Schicht bestimmt.

Im folgenden wird unter dem Transport-Format nur der dynamische Teil des Transport-Formates verstanden.

Ein Übertragungszeitintervall TTI entspricht einer Anzahl von Funkrahmen (RF) und beträgt mindestens einen Funkrahmen. Es gibt die Anzahl der Funkrahmen an, über die sich das Interleaving erstreckt. Beim Interleaving handelt es sich um ein sendeseitiges, zeitliches Verschachteln von Informationsheiten (Symbolen) aus aufeinanderfolgenden Funkrahmen. Die MAC-Schicht liefert eine Transportblockmenge während jedes Übertragungszeitintervalls TTI zur physikalischen Schicht. Das Übertragungszeitintervall ist für einen Transportkanal spezifisch und gehört zum semi-statischen Teil des Transport-Formats. Empfängt die physikalische Schicht zu Beginn eines Übertragungszeitintervalls TTI, das n Funkrahmen umfasst, von der MAC-Schicht eine Transportblockmenge, die zur Übertragung auf einem Transportkanal bestimmt ist, so wird jeder Transportblock dieser Menge in n Segmente zerlegt (Segmentierung von Transportblöcken). Die n Segmente jedes Transportblockes werden in den n aufeinanderfolgenden Funkrahmen des Übertragungszeitintervalls übertragen. Dabei weisen alle n Funkrahmen des Übertragungszeitintervalls dieselbe Reihenfolge der Segmente auf.

Die MAC-Schicht dient dazu, das geeignete Transport-Format für jeden Transportkanal auszuwählen. Bei dieser Auswahl müssen die Prioritäten der logischen Kanäle zwischen RLC- und MAC-Schicht, die im folgenden MAC-Priorität (MAC Logical Priority = MLP) genannt wird, die Belegung der Warteschlangen in der RLC-Schicht (Buffer Occupancies = BO), die Übertragungszeitintervalle TTI der den logischen Kanäle zugeordneten Transportkanäle und Untermengen von Transport-Format-Kombinationen berücksichtigt werden. Eine Warteschlange in der RLC-Schicht enthält Paketeinheiten, die von der RLC-Schicht über die MAC-Schicht zur physikalischen Schicht zu übertragen sind. Eine Untermenge der Transport-Format-Kombination ist ein Teil der möglichen Gesamtmenge von Transport-Format-Kombinationen. Untermengen werden verwendet, um die Anzahl der möglichen Transport-Format-Kombinationen zu begrenzen, da die Anzahl der Bits, mit denen der Empfangsseite angezeigt wird, welche Transport-Format-Kombination zur Übertragung verwendet wurde, ebenfalls begrenzt ist.

Ein Transportkanal (bzw. der oder die auf ihn abgebildeten logischen Kanäle) wird (bzw. werden) als im Funkrahmen inaktiv bezeichnet, wenn der Beginn des Funkrahmens nicht mit dem Beginn des Übertragungszeitintervalls des Transportkanals übereinstimmt. Im anderen Fall heißt er (bzw. heißen sie) aktiv. Beim kürzesten Übertragungszeitintervall entsprechend der Länge eines Funkrahmens von beispielsweise 10 ms ist der zugeordnete Transportkanal niemals inaktiv, da ein Transportblock mindestens dieses kürzeste Übertragungszeitintervall zur Übertragung seiner Daten benötigt. Bei längeren Übertragungszeitintervallen (z.B. 20 ms) kann ein Transportkanal in diesem Sinne inaktiv sein.

In der MAC-Schicht wird zu Beginn jedes Funkrahmens eine Prozedur ausgeführt, welche die aktiven logischen Kanäle für jeden Funkrahmen entsprechend den oben genannten Kriterien sortiert:

1. Zuerst wird nach der höchsten MAC-Priorität sortiert.
2. Wenn die MAC-Prioritäten gleich sind, wird nach der Belegung der Warteschlangen sortiert, wobei die Warteschlangen mit den meisten Paketeinheiten am Anfang der sortierten Liste stehen.
3. Wenn die Belegung der Warteschlangen und die MAC-Prioritäten gleich sind, wird nach den längsten Übertragungszeitintervallen sortiert.

Wenn die Prozedur eine nach den oben angegebenen Kriterien sortierte Liste mit logischen Kanälen, die Daten zur Übertragung aufweisen, erstellt hat, wird vom Listenanfang mit der höchsten MAC-Priorität an das Übertragungszeitintervall des zugeordneten Transportkanals geprüft, um ein geeignetes Transport-Format zu finden. Dabei ist zu beachten, dass die am Ende gewählte Transport-Format-Kombination auf eine Summendatenrate führt, welche die Gesamtdatenrate, die bei der vorgegebenen Sendeleistung erreichbar ist, nicht überschreitet (Das wird als Datenratenbedingung bezeichnet).

Wenn dieser Transportkanal und folglich alle logischen Kanäle, welche auf den Transportkanal abgebildet sind, in einem Funkrahmen inaktiv sind, ist für diesen Transportkanal das Transport-Format der für den vorhergehenden Funkrahmen ausgewählten Transport-Format-Kombination zu nehmen. Im anderen Fall, wenn der aktuelle logische Kanal (LC_X) auf einen aktiven Transportkanal (TC_Y) abgebildet wird, bestimmt die MAC-Schicht das beste Transport-Format, welches der Transportkanal (TC_Y) entsprechend seinen Transport-Format-Mengen für die zu übertragenden Paketeinheiten in der Warteschlange des logischen Kanals LC_X (unter Berücksichtigung aller Paketeinheiten, die dem Transportkanal TC_Y bei der Abfrage höherer priorisierter logischer Kanäle, die ebenfalls auf den zugeordneten Transportkanal TC_Y abgebildet sind, schon zugeteilt wurden) der RLC-Schicht bieten kann. Das beste Transport-Format ist das Transport-Format, welches die höchste Anzahl von echten Nutzdaten-Bits auf dem zugeordneten Transportkanal TC_Y für die Übertragung erlaubt.

Da in der Regel mehrere Transportkanäle, auf die mehrere logische Kanäle abgebildet werden, vorliegen, ist eine Transport-Format-Kombination zu suchen. Dies kann in folgender Weise erfolgen:

In einem ersten Durchlauf, werden die auf jedem Transportkanal zu übertragenden Transportblöcke bestimmt. Dazu wird zu Beginn jedes Funkrahmens die Belegung der Warteschlangen BO jedes einzelnen aktiven logischen Kanals abgefragt und zur Zahl der in diesem Fakrahmen zu übertragenden Blöcke des Transportkanals, auf den der logische Kanal abgebildet ist, hinzuaddiert.

Nach diesem ersten Durchlauf ist die genaue Zahl der Transportblöcke, die auf jedem Transportkanal in diesem Funkrahmen zu übertragen sind, bekannt, und die Kombination dieser Zahlen bestimmt die erforderliche Transport-Format-Kombination. Ist diese in der Menge der von der Funknetzwerk-Steuerung vorgegebenen Transport-Format-Kombinationen vorhanden, so wird sie ausgewählt. Ist sie jedoch nicht in der Menge der gegebenen Transport-Format-Kombinationen enthalten, so muss in einem zweiten Durchlauf eine in der Menge vorhandene Transport-Format-Kombination, die als günstigste Transport-Format-Kombination bezeichnet wird, gefunden werden, die der erforderlichen am nächsten kommt.

Verschiedene Möglichkeiten bieten sich für die Bestimmung der günstigsten Transport-Format-Kombination an:

Eine erste Möglichkeit wird als einfache Abstandsbestimmung bezeichnet, bei der beispielsweise diejenige Transport-Format-Kombination ausgewählt werden kann, die bezogen auf ihre Komponenten die kleinste quadratische Abweichung (oder kleinste Betragsabweichung) oder allgemein - bezogen auf eine beliebige Metrik - den kleinsten Abstand von der erforderlichen Transport-Format-Kombination hat. Dies kann dazu führen, dass die RLC-Schicht zusätzlich Füll-Paketeinheiten erzeugen muss, die über einen logischen Kanal übertragen werden. Dies zeigt folgendes Beispiel: Seien die logischen Kanäle LC1, LC2 und LC3 gegeben, die jeweils auf die Transportkanäle TC1, TC2 und TC3 abgebildet werden. Betragen die Belegungen in den Warteschlangen BO(LC1) = 3, BO(LC2) = 2 und BO(LC3) = 1, so sind auf den Transportkanal TC1 4 Transportblöcke und auf den Transportkanal TC2 2 Transportblöcke zu übertragen. Ist unter den möglichen Transport-Format-Kombinationen die Transport-Format-Kombination (4,2) nicht vorhanden sondern nur die Transport-Format-Kombinationen (5,2) und (3,1), so würde die Transport-Format-Kombination (5,2) ausgewählt, da

$$(5\text{-}4)^2 + (2\text{-}2)^2 = 1$$

eine kleinere quadratische Abweichung als

$$(3 - 4)^2 + (1 - 2)^2 = 2$$

ergibt, bzw.

$$|5 - 4| + |2 - 2| = 1$$

eine kleinere Betragsabweichung als

$$|3 - 4| + |1 - 2| = 2$$

ergibt. Da dann aber in diesem Fall ein Transportblock (Füll-Transportblock) mehr zu versenden ist als tatsächlich vorliegt, muss eine Füll-Paketeinheit erzeugt werden. Die Erzeugung von Füll-Paketeinheiten sollte nach Möglichkeit vermieden werden, da Füll-Paketeinheiten unnötig Kanalkapazität belegen, ohne der echten Nutzdatenübertragung zu dienen.

Bei der im folgenden vorgestellten zweiten Möglichkeit wird daher eine Abstandsbestimmung unter Berücksichtigung der erforderlichen Anzahl von Füll-Paketeinheiten betrachtet. Diese zweite Möglichkeit wird als bedingte Abstandsbestimmung bezeichnet. Die oben betrachtete einfache Abstandsbestimmung kann zu Transport-Format-Kombinationen führen, die unter Umständen viele Füll-Paketeinheiten zu übertragen erfordern. Um die Zahl der entstehenden Füll-Paketeinheiten auf einen nicht zu überschreitenden Wert zu begrenzen, wird folgendes Vorgehen angewendet:

Zusätzlich zur Bestimmung des Abstands von der erforderlichen Transport-Format-Kombination wird noch der erforderliche Anteil an Füll-Paketeinheiten immer mitbestimmt. Sei $\underline{T}$ eine Transport-Format-Kombination und $\underline{T}_{erf}$ die erforderliche Transport-Format-Kombination. Dann liefert $\underline{T} - \underline{T}_{erf}$ einen Vektor, der positive und negative Komponenten enthalten kann. Die Summe der positiven Komponenten ergibt die Anzahl der Paketeinheiten, die als Füll-Paketeinheiten zu übertragen sind (formal geschrieben durch $\mathbf{Pos}(\underline{T} - \underline{T}_{erf})\underline{e}$, wobei der Operator $\mathbf{Pos(v)}$ alle negativen Komponenten des Vektors $\mathbf{v}$ zu Null setzt und $\underline{e}$ der Einheitsspaltenvektor ist), die Betragssumme der negativen Komponenten (formal geschrieben durch $\mathbf{Neg}(\underline{T} - \underline{T}_{erf})\underline{e}$, wobei der Operator $\mathbf{Neg(v)}$ alle positiven Komponenten des Vektors $\mathbf{v}$ zu Null setzt) ergibt die Abzahl der wartenden Blöcke, die bei Wahl von $\underline{T}$ nicht übertragen werden können.

Unterscheiden sich zwei Transport-Format-Kombinationen, die im Vergleich zu den übrigen Transport-Format-Kombinationen nah an der erforderlichen Transport-Format-Kombination liegt, in der Anzahl der wartenden Blöcke bzw. in der Anzahl der erforderlichen Füll-Paketeinheiten beispielsweise so, dass die erste Transport-Format-Kombination keinerlei Füll-Paketeinheiten erfordert, aber auf allen Transportkanälen je 2 der wartenden Blöcke nicht übertragen werden, die andere Transport-Format-Kombination dagegen nur eine Füll-Paketeinheit erfordert, so erscheint es trotz der einen zusätzlichen Füll-Paketeinheit sinnvoller, die zweite Transport-Format-Kombination zu wählen, da diese einen deutlich besseren Durchsatz erzielt.

Somit werden zusätzlich zum Abstand zur erforderlichen Transport-Format-Kombination die Werte $\mathbf{Pos}(\underline{T} - \underline{T}_{erf})\,\underline{e}$ für die Anzahl der Füll-Paketeinheiten und $\mathbf{Neg}(\underline{T} - \underline{T}_{erf})\,\underline{e}$ für die Anzahl der wartenden Paketeinheiten bestimmt. Überschreitet $\mathbf{Pos}(\underline{T} - \underline{T}_{erf})\,\underline{e}$ einen bestimmten Wert (beispielsweise 2 Füll-Paketeinheiten), so wird die Transport-Format-Kombination nicht weiter berücksichtigt. Des weiteren kann auch die Anzahl der erforderlichen Füll-Paketeinheiten in Relation zu den tatsächlich übertragenen Transportblöcken für Nutzdaten gesetzt werden: Die Transportblöcke für Nutzdaten ergeben sich zu $[\underline{T}_{erf} + \mathbf{Neg}(\underline{T} - \underline{T}_{erf})]\,\underline{e}$, so dass der Anteil an Füll-Paketeinheiten gegeben ist durch $\mathbf{Pos}(\underline{T} - \underline{T}_{erf})\,\underline{e}\,/\,[\underline{T}_{erf} + \mathbf{Neg}(\underline{T} - \underline{T}_{erf})]\underline{e}$, und eine Transport-Format-Kombination bei der Suche nicht weiter berücksichtigt wird, wenn dieser Anteil einen vorgegebenen Prozentsatz (beispielsweise 10%) überschreitet.

Eine dritte Möglichkeit zur Bestimmung der günstigsten Transport-Format-Kombination wird im folgenden vorgestellt und berücksichtigt die Vergabe der Prioritäten der logischen Kanäle. Das kann an dem folgenden Beispiel erläutert werden:

Es seien 6 logische Kanäle LC1 bis LC6 gegeben, die auf 3 Transportkanäle abgebildet werden.
Der logische Kanal LC1 ist auf den Transportkanal TC1,
der logische Kanal LC2 ist auf den Transportkanal TC1,
der logische Kanal LC3 ist auf den Transportkanal TC2,
der logische Kanal LC4 ist auf den Transportkanal TC3,
der logische Kanal LC5 ist auf den Transportkanal TC2 und
der logische Kanal LC6 ist auf den Transportkanal TC3 abgebildet.
Die dem logischen Kanal LC1 zugeordnete Warteschlange BO(LC1) sei mit 4 Paketeinheiten,
die dem logischen Kanal LC2 zugeordnete Warteschlange BO(LC2) sei mit 2 Paketeinheiten,
die dem logischen Kanal LC3 zugeordnete Warteschlange BO(LC3) sei mit 3 Paketeinheiten,
die dem logischen Kanal LC4 zugeordnete Warteschlange BO(LC4) sei mit 8 Paketeinheiten,
die dem logischen Kanal LC5 zugeordnete Warteschlange BO(LC5) sei mit 5 Paketeinheiten und
die dem logischen Kanal LC6 zugeordnete Warteschlange BO(LC6) sei mit 9 Paketeinheiten belegt.

Die Indizes der logischen Kanäle drücken auch ihre Priorität aus, wobei 1 die höchste Priorität bedeutet. Es wird weiterhin (ohne Beschränkung der Allgemeingültigkeit) angenommen, dass die Nummerierung der Transportkanäle derart erfolgt, dass der Transportkanal TC1 immer Paketeinheiten des logischen Kanals LC1 befördert, der Transportkanal TC2 Paketeinheiten mindestens eines logischen Kanal befördert, der eine höhere Priorität hat als alle logischen Kanäle, die Paketeinheiten bzw. Transportblöcke der Transportkanäle TC3, TC4, ... befördern werden, der Transportkanal TC3 Paketeinheiten mindestens eines logischen Kanal befördert, der eine höhere Priorität hat als alle logischen Kanäle die Paketeinheiten bzw. Transportblöcke der Transportkanäle TC4, TC5, ... befördern werden, usw.

Demnach sind vom Transportkanal TC1 (4+2) = 6 Transportblöcke, vom Transportkanal TC2 (3 + 5) = 8 Transportblöcke und vom Transportkanal TC3 (8 + 9) = 17 Transportblöcke zu transportieren. Die erforderliche Transport-Format-Kombination wäre somit (6, 8, 17).

Zur Berücksichtigung der Prioritäten wird die Menge der gegebenen Transport-Format-Kombinationen so eingeschränkt, dass alle Transport-Format-Kombination die Bedingung TF1 $\geq$ 6, TF2 $\geq$ 3, TF3 $\geq$ 8 erfüllen, wobei TF1, TF2 bzw. TF3 Transport-Formate von TC1, TC2, bzw. TC3 bedeuten. In dieser Bedingung wird zunächst TF1 $\geq$ 6 gefordert, damit die beiden am höchsten priorisierten und auf den Transportkanal TC1 abgebildeten logischen Kanäle hinsichtlich ihrer Priorität korrekt behandelt werden. Kann die Bedingung für den Transportkanal TC1 nicht durch die vorhandenen Transport-Format-Kombination erfüllt werden, so wird die Bedingung abgeschwächt auf TF1 $\geq$ 4 (Mindestbedingung für einen einzigen logischen Kanal). Das bedeutet, dass nur noch der logische Kanal LC1 mit der höchsten Priorität korrekt berücksichtigt wird Im obigen Beispiel sind TF2 $\geq$ 3, TF3 $\geq$ 8 ebenfalls Mindestbedingungen für einen einzigen logischen Kanal.

Falls auch die Mindestbedingung für einen einzigen logischen Kanal nicht erfüllt werden kann, weil die Transport-Formate eines Transportkanals nur weniger Transportblöcke zu übertragen erlauben, so wird für diesen Transportkanal der folgende Minimalfall angenommen: Erlauben die Transport-Formate des Transportkanals TC3 nur die Übertragung von 6 Transportblöcken, während die übrigen Transportkanäle die Bedingungen erfüllen, so lautet die Gesamtbedingung, mit der die Menge der gegebenen Transport-Format-Kombination eingeschränkt wird: TF1 $\geq$ 4, TF2 $\geq$ 3, TF3 = 6. In der so eingeschränkten Menge wird dann mittels der Abstandsbestimmung (erste bzw. zweite Möglichkeit) diejenige Transport-Format-Kombination ermittelt, die der erforderlichen (nämlich der Transport-Format-Kombination (6, 8, 17)) am nächsten liegt.

Im vorliegenden Fall würde - wenn als mögliche Transport-Format-Kombination nur (6, 8, 4) und (2, 8, 12) angenommen werden - die reine Abstandsbestimmung dazu führen, dass die Transport-Format-Kombination (2, 8, 12) ausgewählt wird, weil

Dist[(6, 8, 17), (6, 8, 4)] = 0 + 0 + 13 > 4 + 0 + 5 = Dist[(2, 8, 12), (6, 8, 17)].

Diese Wahl würde jedoch zu einer Prioritätsinversion führen, da jetzt die niedriger priorisierten logischen Kanäle LC3 und LC5 mehr Daten zu senden in der Lage sind (der logische Kanal LC3 kann die 3 wartenden Paketeinheiten und der logische Kanal LC5 sogar die 5 wartenden Paketeinheiten übertragen) als der am höchsten priorisierte logische Kanal LC1 (der logische Kanal LC1 kann nur 2 Paketeinheiten übertragen, obwohl 4 Paketeinheiten in der zugeordneten Warteschlange warten). Der logische Kanal LC2 wird gar nicht bedient, obwohl er höher priorisiert ist als die logischen Kanäle LC3 und LC5. Dagegen würde die Einschränkung der Transportkombinationsmenge mit der Bedingung TF1 $\geq$ 4, TF2 $\geq$ 3, TF3 $\geq$ 8 auf die Transport-Format-Kombination (6, 8, 4) führen, welche die Prioritäten korrekt berücksichtigt.

Im allgemeinen Fall ist die Bedingung für die Einschränkung der Menge der gegebenen Transport-Format-Kombinationen zur Berücksichtigung der Prioritäten wie folgt zu formulieren: Seien die logischen Kanäle LC($F_i$,) LC ($F_i$+1),..., LC($F_i$ + $M_i$ - 1) die ununterbrochene Liste der am höchsten priorisierten logischen Kanäle, die auf den Transportkanal TCi abgebildet werden, d.h. weitere logische Kanäle, die auf den Transportkanal TCi abgebildet werden haben einen Index, der größer ist als $F_i$ + $M_i$. Dabei sind i, $F_i$ und $M_i$ natürliche Zahlen. (Für i=1 ist definitionsgemäß $F_i$=$F_1$=1.)

Sind beispielsweise der logische Kanal LC1 auf den Transportkanal TC1,
der logische Kanal LC2 auf den Transportkanal TC1,
der logische Kanal LC3 auf den Transportkanal TC2,
der logische Kanal LC4 auf den Transportkanal TC2,
der logische Kanal LC5 auf den Transportkanal TC2,
der logische Kanal LC6 auf den Transportkanal TC1,
der logische Kanal LC7 auf den Transportkanal TC3,
der logische Kanal LC8 auf den Transportkanal TC3,
der logische Kanal LC9 auf den Transportkanal TC4 und
der logische Kanal LC10 auf den Transportkanal TC3 abgebildet,
so ist $F_1$ = 1, $M_1$ = 2, $F_2$ = 3, $M_2$ = 3, $F_3$ = 7, $M_3$ = 2, $F_4$ = 9, $M_4$ = 1.

Die Menge der gegebenen Transport-Format-Kombination wird zur korrekten Berücksichtigung der Prioritäten nach den folgenden Bedingungen beginnend mit i=1 eingeschränkt:

$$\text{TFi} \geq \sum_{j=F_i}^{F_i+M_i-1} \text{BO(LCj) für alle TCi mit } i = 1, 2, \ldots, N$$

(N gibt die Anzahl der Transportkanäle an.).

Kann kann die Bedingung für den Transportkanal TC i durch die Menge der gegebenen Transport-Format-Kombination nicht erfüllt werden, so wird überprüft, ob durch Weglassen des jeweils am niedrigsten priorisierten logischen Kanals in der Summe die resultierende Bedingung von Transport-Format-Kombinationen in der Menge der gegebenen Transport-Format-Kombinationen erfüllt werden kann, d.h. ob o.g. Bedingungen ersetzt werden können durch

$$\text{TFi} \geq \sum_{j=F_i}^{F_i+M_i-2} \text{BO(LCj)},$$

d.h. nur die ersten $M_i$-1 höchstpriorisierten Transportkanäle, die auf den Transportkanal TCi abgebildet werden, werden berücksichtigt, oder durch

$$TFi \geq \sum_{j=F_i}^{F_i+M_i-3} BO(LCj),$$

d.h. nur die ersten $M_i$ - 2 höchstpriorisierten Transportkanäle, die auf den Transportkanal TC i abgebildet werden, werden berücksichtigt usw., bis hin zur Bedingung

$$TFi \geq BO(LC(F_i)),$$

d.h. nur der am höchsten priorisierte logische Kanal, der auf den Transportkanal TC i abgebildet wird, wird berücksichtigt.

Ist schließlich auch $TFi \geq BO(LC(F_i))$ in der Menge der gegebenen Transport-Format-Kombination nicht erfüllbar (Mindestbedingung für einen einzelnen logischen Kanal), so wird die Bedingung ersetzt durch die Minimalbedingung $TFi = X$, wobei X die größte Anzahl von Paketeinheiten bzw. Transportblöcken ist, die gemäß der Menge der möglichen Transport-Format-Kombination auf dem Transportkanal TC i übertragen werden kann. X ist dann immer kleiner als $BO(LC(F_i))$.

Ist eine erfüllbare Bedingung für den Transportkanal TC i gefunden worden, so wird die bis dahin eingeschränkten Menge der Transport-Format-Kombination mit dieser Bedingung weiter eingeschränkt und anschießend mit TC(i+1) fortgefahren, d.h. zunächst erfolgt eine Bestimmung der erfüllbaren Bedingung und dann eine weitere Einschränkung der bis dahin gefundenen Menge der Transport-Format-Kombination mittels dieser Bedingung.

Nach Betrachtung aller Transportkanäle ist die Menge der möglichen Transport-Format-Kombinationen unter Berücksichtigung der Prioritäten geeignet eingeschränkt. In der eingeschränkten Menge kann nun mittels Abstandsbestimmung (nach erster und zweiter Möglichkeit zur Bestimmung der günstigsten Transport-Format-Kombination) diejenige Transport-Format-Kombination bestimmt werden, die den kleinsten Abstand von der erforderlichen Transport-Format-Kombination hat, sofern die verbleibende Menge nicht nur ein Element enthält.

Eine im folgenden beschriebene vierte Möglichkeit zur Bestimmung der günstigsten Transport-Format-Kombination berücksichtigt das Erfordernis, keine Füll-Paketeinheiten einzufügen, und die Prioritäten der logischen Kanäle. Wenn die Füll-Paketeinheiten vollständig ausgeschlossen werden, wird folgendermaßen vorgegangen:

Ist wie im oben genannten Beispiel die erforderliche Transport-Format-Kombination (6, 8, 17), so wird die Menge der möglichen Transport-Format-Kombinationen zunächst auf diejenigen Transport-Format-Kombinationen eingeschränkt, die genau 6 Paketeinheiten bzw. Transportblöcke über den Transportkanal TC1 zu übertragen erlauben. Gibt es solche Transport-Format-Kombination nicht, so erfolgt die Einschränkung auf solche, die genau 5 Paketeinheiten bzw. Transportblöcke über den Transportkanal TC1 zu übertragen erlauben. Gibt es diese ebenfalls nicht, so wird die Anzahl der Paketeinheiten bzw. Transportblöcke, die über den Transportkanal TC1 übertragen werden sollen, weiter so verkleinert, bis die Anzahl der für die Übertragung vorhandenen Blöcke mit der ersten Komponente (bzw. erstem Transport-Format) einer Transport-Format-Kombination in der Menge der gegebenen Transport-Format-Kombination übereinstimmt.

Die gefundene Teilmenge der Transport-Format-Kombination wird nun auf diejenigen Transport-Format-Kombinationen eingeschränkt, die genau 8 Paketeinheiten bzw. Transportblöcke über den Transportkanal TC2 zu übertragen erlauben. Gibt es keine entsprechende Transport-Format-Kombination, so wird die Teilmenge auf diejenigen Transport-Format-Kombinationen eingeschränkt, die genau 7 Paketeinheiten bzw. Transportblöcke über den Transportkanal TC2 zu übertragen erlauben. Gibt es diese ebenfalls nicht, so wird die Anzahl der Paketeinheiten bzw. Transportblöcke, die über den Transportkanal TC2 übertragen werden sollen, weiter so verkleinert, bis die Anzahl der für die Übertragung vorhandenen Paketeinheiten bzw. Transportblöcke mit der zweiten Komponente einer Transport-Format-Kombination in der Menge der gegebenen Transport-Format-Kombinationen übereinstimmt.

In der verbliebenen Teilmenge wird dann die Transport-Format-Kombination ausgewählt, welche die größte Anzahl Paketeinheiten bzw. Transportblöcke über den Transportkanal TC3 zu übertragen erlaubt, nicht aber mehr als 17 Paketeinheiten bzw. Transportblöcke. Auf diese Weise ist sichergestellt, dass der Transportkanal TC1, dem der am höchsten priorisierte logische Kanal zugeordnet ist, immer die höchst-mögliche Anzahl von Paketeinheiten bzw. Transportblöcken transportiert, unter der Voraussetzung, dass keine Füll-Paketeinheiten gesendet werden müssen. Bei ungünstiger Wahl der Menge der gegebenen Transport-Format-Kombinationen kann das jedoch auf einen schlechten Durchsatz führen mit der Folge, dass die Warteschlangen der einzelnen logischen Kanäle anwachsen. Ein solches Verhalten sollte von der Funknetzwerk-Steuerung durch Wahl geeigneter Transport-Format-Kombination vermieden werden.

Es kann vorkommen, dass bedingt durch die Wahl der gegebenen Transport-Format-Kombinationen und den sich entwickelnden Warteschlangen immer nur die höchstpriorisierten logischen Kanäle bei der Datenübertragung zum Zuge kommen. Um dies zu vermeiden, kann die Prioritätsliste in allen Funkrahmen von je zwei vorher festgelegten, nicht benachbarten (markierten) Übertragungszeitintervallen vorübergehend so geändert werden, dass z.B. der logische Kanal mit der niedrigsten Priorität in diesem Funkrahmen die höchste Priorität zugewiesen bekommt, so dass die in seiner Warteschlange wartenden Blöcke (oder ein Teil davon) mit Sicherheit übertragen werden.

Dabei wird zunächst die Summe über die Gesamtzahl der übertragenen Transportblöcke zwischen zwei aufeinanderfolgenden (im o.g. Sinne) markierten Übertragungszeitintervallen gebildet. Weiterhin ist ein maximaler Anteil (z.B. in Prozent) der Anzahl von Transportblöcken, welche der am niedrigsten priorisierte logische Kanal durch vorübergehende Prioritätsänderung übertragen darf, vorgegeben. Aus der Summe und diesem Anteil bestimmt die MAC-Schicht die absolute Zahl von Transportblöcken des logischen Kanals mit niedrigster Priorität, die im darauffolgenden markierten Übertragungszeitintervalls mit höchster Priorität übertragen werden können.

Durch Berücksichtigung auch anderer niedrig priorisierter logischer Kanäle kann sichergestellt werden, dass im Mittel ein gegebener Prozentsatz der Transportblöcke der logischen Kanäle mit niedrigster Priorität auf jeden Fall übertragen werden.

Nachdem für einen Funkrahmen eine komplette Transport-Format-Kombination berechnet worden ist, fordert die MAC-Schicht von der RLC-Schicht die Sendung der berechneten Anzahl von Transportblöcken zur MAC-Schicht an. Anschließend werden die erzeugten Transportblock-Mengen (eine Menge für jeden Transportkanal) zur physikalischen Schicht übertragen. Die physikalische Schicht fügt dann die empfangenen Transportblock-Mengen nach Maßgabe der gewählten Transport-Format-Kombination unter Beachtung der Segmentierung von Transportblöcken, wenn das Übertragungszeitintervall TTI mehr als einen Funkrahmen enthält, in einen Funkrahmen ein.

Die oben beschriebene Prozedur zur Auswahl einer optimalen Transport-Format-Kombination für den nächsten Funkrahmen, erstellt zuerst eine sortierte Liste nach drei Kriterien. Wie dargestellt, ist das erste Kriterium die Sortierung der logischen Kanäle nach ihrer MAC-Priorität. Nur wenn einige logische Kanäle die gleiche logische Priorität haben, wird die Größe der Warteschlagen in der RLC-Schicht betrachtet. Das längste Übertragungszeitintervall ist das dritte Kriterium, wenn die ersten beiden Parameter gleich sind. Da die Priorität der MAC-Schicht und das Übertragungszeitintervall semi-statische Parameter sind (im allgemeinen kann der Parameter nur durch eine Transportkanal-Rekonfiguration geändert werden), aber die Größe der Warteschlangen von Funkrahmen zu Funkrahmen variiert, kann die oben genannte Sortierung mit demselben Sortierergebnis erfindungsgemäß nach folgendem Schema ausgeführt werden:

Nach einer Transportkanal-Rekonfigurierung, die z.B. beinhalten kann, dass ein weiterer Transportkanal hinzugenommen wird oder ein vorhandener Transportkanal entfernt wird, werden die logischen Kanäle einmalig

1. nach ihrer MAC-Priorität (MLP) sortiert,
2. und für alle logischen Kanäle mit gleicher MAC-Priorität (MLP) nach ihrem Übertragungszeitintervall (TTI) in absteigender Länge sortiert

Zu Beginn jedes Funkrahmens werden die dann aktiven logischen Kanäle derselben MAC-Priorität in der geordneten Liste dann nur noch nach den Belegungen der Warteschlangen (längste Warteschlange zuerst) umsortiert, wobei die Länge des Übertragungszeitintervalls (TTI) dann ignoriert wird. Falls in einem Funkrahmen ein niedrig priorisierter logischer Kanal bevorzugt werden soll (wie oben beschrieben), so muss für diesen Funkrahmen auch die Sortierung nach MLP entsprechend geändert werden. Gemäß dieser Sortierung fragt die MAC-Schicht dann die RLC-Schicht der einzelnen logischen Kanäle nach der Anzahl der zu übertragenden Paketeinheiten bzw. Transportblöcke und wählt das günstigste vorhandene Transportformat (d.h. dasjenige, das die höchste Datenrate erlaubt) aus Die so definierte Sortierung spart somit zu Beginn jedes Funkrahmens zwei Sortierungsschritte ein.

Ein Beispiel für dieses Sortierschema zeigen die Fig. 3 bis 5. Fig. 3 stellt eine unsortierte Liste mit gleichen Prioritäten der MAC-Schicht dar, wobei ID eine Identifikationsbezeichnung für die logischen Kanäle, BO die Belegung der Warteschlange von Paketeinheiten, die über einen zugeordneten logischen Kanal übertragen werden sollen, und TTI das Übertragungszeitintervall des zugeordneten Transportkanals ist. Die unsortierte liste weist vier logische Kanäle mit ID = a, b, c und d auf. Dem logischen Kanal mit der ID = a ist BO = 7 und TTI = 10, dem logischen Kanal mit der ID = b ist BO = 3 und TTI=40, dem logischen Kanal mit der ID = c ist BO = 3 und TTI = 20 und dem logischen Kanal mit der ID = d ist BO = 7 und TTI = 40 zugeordnet. Die Fig. 4 zeigt die liste, die entsprechend den längsten Übertragungszeitintervallen TTI sortiert ist. Anschließend werden die logischen Kanäle nach der Größe der Warteschlangen BO sortiert, wobei nicht die Übertragungszeitintervalle TTI betrachtet werden. Diese sortierte Liste zeigt Fig. 5.

**Patentansprüche**

1.  Drahtloses Netzwerk mit einer Funknetzwerk-Steuerung und mehreren zugeordneten Terminals,
    die jeweils zur Übertragung von aus Paketeinheiten eines logischen Kanals gebildeten Transportblöcken auf einem Transportkanal vorgesehen sind, dem ein Übertragungszeitintervall aus wenigstens einem Funkrahmen zugeordnet ist und der aktiv ist, wenn der Beginn seines Übertragungszeitintervalls und eines Funkrahmens übereinstimmen, und
    die zur Bildung wenigstens einer Transport-Format-Kombination, welche die zur Übertragung vorgesehenen Transportblöcke auf jedem Transportkanal angeben, so vorgesehen sind,

    -   dass eine erforderliche Transport-Format-Kombination zu bestimmen ist, die als Transport-Format jeweils die für eine Übertragung im zugeordneten Transportkanal wartenden Paketeinheiten enthält, und
    -   dass aus einer Menge von vorgegebenen Transport-Format-Kombinationen diejenige Transport-Format-Kombination auszuwählen ist, welche der erforderlichen Transport-Format-Kombination entspricht oder am nächsten kommt.

2.  Drahtloses Netzwerk nach Anspruch 1,
    **dadurch gekennzeichnet,**
    **dass**, falls die erforderliche Transport-Format-Kombination nicht in der Menge von vorgegebenen Transport-Format-Kombinationen enthalten ist, die Funknetzwerk-Steuerung oder ein Terminal zur Auswahl derjenigen Transport-Format-Kombination vorgesehen sind, welche den kleinsten Abstand bezogen auf eine Metrik zur erforderlichen Transport-Format-Kombination aufweist.

3.  Drahtloses Netzwerk nach Anspruch 2,
    **dadurch gekennzeichnet,**
    **dass** die Funknetzwerk-Steuerung oder ein Terminal bei einer Wahl einer Transport-Format-Kombination mit der mehr als die erforderlichen Transportblöcke zu übertragen sind, zur Auffüllung der nicht vorhandenen Transportblöcke durch Füll-Transportblöcke ohne Nutzdaten vorgesehen sind.

4.  Drahtloses Netzwerk nach Anspruch 3,
    **dadurch gekennzeichnet,**
    **dass** die Funknetzwerk-Steuerung oder ein Terminal zur Auswahl derjenigen Transport-Format-Kombination vorgesehen sind, bei der eine bestimmte Anzahl von zusätzlichen Füll-Transportblöcken oder bei der das Verhältnis der Anzahl von Füll-Transportblöcken zu tatsächlich übertragenen Transportblöcken mit Nutzdaten nicht überschritten wird.

5.  Drahtloses Netzwerk nach Anspruch 1,
    **dadurch gekennzeichnet,**
    **dass**, falls die erforderliche Transport-Format-Kombination nicht in der Menge von vorgegebenen Transport-Format-Kombinationen enthalten ist, die Funknetzwerk-Steuerung oder ein Terminal zur auf bestimmten Bedingungen beruhenden Einschränkung der Menge von Transport-Format-Kombinationen in der Reihenfolge der Priorität der logischen Kanäle vorgesehen sind und
    zur Auswahl derjenigen Transport-Format-Kombination aus der eingeschränkten Menge vorgesehen ist, welche den kleinsten Abstand bezogen auf eine Metrik zur erforderlichen Transport-Format-Kombination aufweist.

FIG. 1

FIG. 2

| ID | BO | TTI |
|----|----|-----|
| a | 7 | 10 |
| b | 3 | 40 |
| c | 3 | 20 |
| d | 7 | 40 |

FIG. 3

| ID | BO | TTI |
|----|----|-----|
| b | 3 | 40 |
| d | 7 | 40 |
| c | 3 | 20 |
| a | 7 | 10 |

FIG. 4

| ID | BO | TTI |
|----|----|-----|
| d | 7 | 40 |
| a | 7 | 10 |
| b | 3 | 40 |
| c | 3 | 20 |

FIG. 5